# DEMANDE DE BREVET EUROPEEN

(11) **EP 1 279 577 A1**
(43) Date de publication de la demande: **29.01.2003**
(21) Numéro de dépôt: 02291713.2
(22) Date de dépôt: 08.07.2002
(51) Int. Cl.: B60T 1/06, B60T 7/02, F16D 49/00, B60T 1/00

(54) **Système d'immobilisation d'un véhicule automobile en stationnement**

(30) Priorité: 27.07.2001 FR 0110130
(71) Demandeur: Peugeot Citroen Automobiles SA, 92200 Neuilly sur Seine (FR)
(72) Inventeur: Lalu, Daniel, 77240 Cesson (FR)
(74) Mandataire: Jacobson, Claude

(57) **Abrégé**

Système d'immobilisation d'un véhicule automobile (2) en stationnement comportant :
- une couronne (18) destinée à être en prise avec des roues motrices du véhicule, et
- un dispositif (8) d'immobilisation en rotation de ladite couronne (18) pour immobiliser le véhicule (2) en stationnement lorsque la couronne (18) est en prise avec les roues motrices, sous le contrôle de moyens de commande (6).

Le dispositif (8) d'immobilisation comporte un patin de frein (58) déplaçable entre une position escamotée de déblocage de ladite couronne (18), et une position active dans laquelle il est en appui sur ladite couronne (18) pour la bloquer en rotation par friction.

## Description

La présente invention concerne d'une manière générale un dispositif d'immobilisation d'un véhicule automobile en stationnement et plus particulièrement un dispositif d'immobilisation d'un véhicule automobile à moteur thermique équipé de soupapes à commande électrique.

Actuellement, des véhicules automobiles sont équipés de deux dispositifs d'immobilisation en stationnement.

Le premier dispositif connu sous le nom de « frein à main », consiste à bloquer par des moyens mécaniques classiques au moins une roue du véhicule.

Le second dispositif d'immobilisation met en oeuvre le moteur thermique d'entraînement des roues motrices du véhicule.

Ce moteur thermique comporte de façon classique plusieurs chambres de combustion formées par un cylindre, une culasse et un piston et associées à des soupapes d'admission et d'échappement. De façon classique également, le déplacement des soupapes est commandé par des cames d'un arbre à cames du moteur, de sorte que quelle que soit la position de cet arbre, il existe toujours une chambre de combustion hermétiquement fermée par des soupapes que le moteur soit en marche ou au repos. Par conséquent, au repos, le gaz contenu dans une chambre de combustion hermétiquement fermée par des soupapes exerce une force de rappel sur le piston correspondant à la manière d'un ressort, de telle sorte que celui-ci est pratiquement immobilisé à l'intérieur du cylindre. Il est donc relativement difficile de faire tourner l'arbre de sortie d'un tel moteur thermique classique lorsque celui-ci est au repos puisque au moins l'un de ses pistons est pratiquement immobilisé en position dans le cylindre correspondant.

Le second dispositif d'immobilisation en stationnement d'un véhicule, équipé d'un moteur thermique classique, consiste donc à enclencher un rapport de vitesse lorsque le véhicule est stationné pour mettre en prise l'arbre de sortie du moteur avec les roues motrices du véhicule par l'intermédiaire de moyens de transmission de puissance. On conçoit dès lors qu'il est difficile de déplacer un véhicule dans ces conditions et que cette caractéristique peut être exploitée comme frein additionnel au frein à main.

Toutefois, de nouveaux systèmes de commande du déplacement des soupapes des moteurs à combustion interne ont été développés permettant de s'affranchir de l'arbre à cames de commande des soupapes. Par exemple ; il existe des systèmes de commande de déplacement des soupapes comportant des actionneurs électromagnétiques. Un tel actionneur électromagnétique de soupape comporte généralement deux électro-aimants entre lesquels est ménagé un entrefer. Dans l'entrefer est montée une palette magnétique reliée à la soupape à actionner, déplaçable par les électro-aimants à l'encontre de l'action de ressorts de stockage d'énergie. Au repos, les ressorts de stockage d'énergie ramènent la palette au milieu de l'entrefer de sorte que toutes les chambres du moteur sont à la pression atmosphérique. En conçoit donc que pour les véhicules équipés d'actionneurs de soupapes tel que des actionneurs électromagnétiques de soupapes il n'est plus possible d'utiliser le moteur comme source de frein additionnel.

La présente invention vise à remédier à cet inconvénient en proposant un système d'immobilisation d'un véhicule automobile en stationnement indépendant du système d'actionnement des soupapes du moteur à combustion utilisé.

Elle a donc pour objet un système d'immobilisation d'un véhicule automobile en stationnement comportant :
- une couronne destinée à être en prise avec des roues motrices du véhicule,
- un dispositif d'immobilisation en rotation de ladite couronne pour immobiliser le véhicule en stationnement lorsque la couronne est en prise avec les roues motrices, sous le contrôle de moyens de commande ,
caractérisé en ce que le dispositif d'immobilisation comporte un patin de frein déplaçable entre une position escamotée de déblocage de ladite couronne, et une position active dans laquelle il est en appui sur ladite couronne pour la bloquer en rotation par friction.

Suivant d'autres caractéristiques et avantages de ce système :
- la couronne présente à sa périphérie, des parties en saillie et en creux successives, caractérisé en ce que le patin de frein comporte une surface lisse adaptée pour être en appui sur les extrémités d'au moins deux parties en saillie successives de la couronne ;
- la couronne est formée par une couronne de démarreur du véhicule ;
- le dispositif d'immobilisation comporte des moyens de déplacement dudit patin de frein, ces moyens de déplacement étant équipés de moyens élastiques exerçant sur le patin de frein une force de rappel pour solliciter celui-ci en position active, et de moyens électromagnétiques pour déplacer ce patin de frein jusqu'à sa position escamotée ;
- le dispositif d'immobilisation est intégré dans un démarreur du véhicule ;
- le dispositif d'immobilisation est intégré dans une boîte de vitesses associée aux roues motrices du véhicule ;
- le véhicule comporte un moteur thermique équipé de soupapes à commande électromagnétique, apte à actionner lesdites roues motrices du véhicule ; et
- les moyens de commande sont adaptés pour contrôler le dispositif d'immobilisation.

L'invention sera mieux comprise à la lecture de la description qui va suivre donnée uniquement à titre d'exemple et faite en se référant aux dessins annexés sur lesquels :
- la figure 1 représente une vue schématique d'un véhicule équipé un dispositif d'immobilisation de celui-ci en stationnement conforme à l'invention,
- la figure 2 est une vue schématique d'un exemple de réalisation d'un dispositif d'immobilisation conforme à l'invention, et
- la figure 3 est une vue schématique d'une variante de réalisation d'un dispositif d'immobilisation conforme à l'invention.

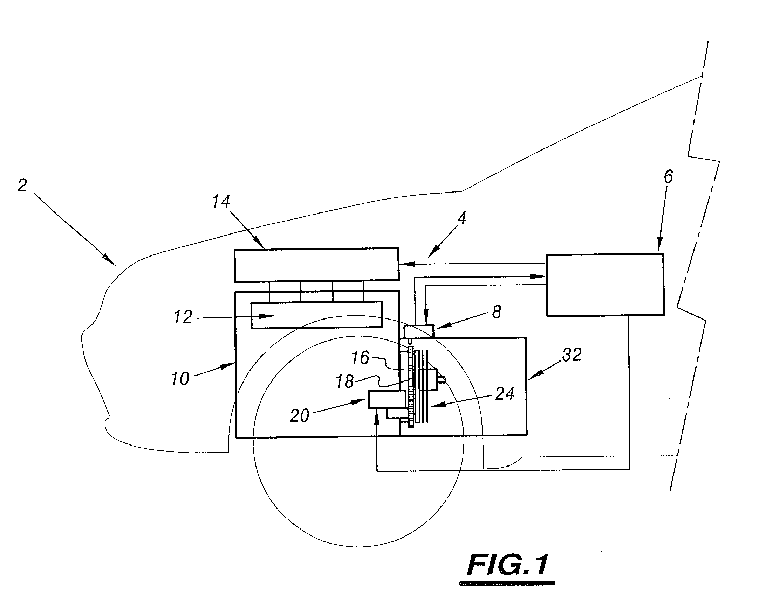

La figure 1 représente un véhicule automobile 2 comportant un ensemble moteur 4 commandé par des moyens de commande 6 et équipé d'un dispositif 8 d'immobilisation en stationnement conforme à l'invention.

L'ensemble moteur 4 comprend un moteur thermique 10 équipé d'actionneurs 12 de soupapes électromagnétiques commandés par un calculateur 14 de contrôle. Le moteur 10 comprend un arbre de sortie 16 associé à une couronne dentée 18 de démarreur ou volant moteur, destinée à coopérer lors du démarrage du moteur du véhicule 2 avec un pignon d'un démarreur 20. L'arbre de sortie 16 du moteur 10 est adapté pour être mis en prise avec des roues motrices du véhicule par l'intermédiaire de moyens de transmission de puissance comportant en outre un mécanisme d'embrayage 24 et une boîte de vitesses 32.

Le dispositif d'immobilisation 8 est associé à la partie supérieure de la boîte de vitesses 32 et est disposé à proximité de la couronne 18 pour que celui-ci puisse agir sur celle-ci lorsqu'il est en position active.

On notera qu'en variante le dispositif d'immobilisation 8 peut être intégré à la boîte de vitesses 32 ou au démarreur 20.

Les moyens de commande 6 sont raccordés de façon classique à l'entrée du calculateur 14 de commande de soupapes du démarreur 20 et du dispositif d'immobilisation 8. Ces moyens de commande 6 sont réalisés de façon classique par exemple à l'aide d'un microcontrôleur associé à des mémoires destinées à stocker un algorithme de commande des différents éléments de l'ensemble moteur 4 et du dispositif d'immobilisation 8 du véhicule.

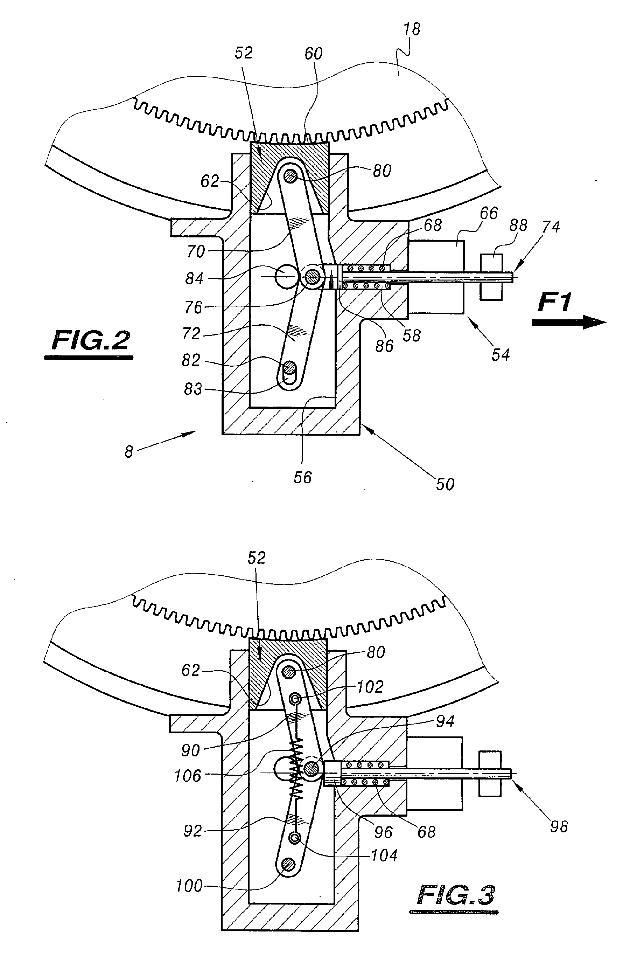

La figure 2 représente un exemple de réalisation d'un dispositif d'immobilisation 8 comportant un corps 50 associé à un patin de frein 52 et à des moyens 54 de déplacement de ce patin de frein.

Le corps 50 est solidaire du véhicule. Par exemple, il est associé à la partie supérieure de la boîte de vitesses 32 et disposé à proximité de la couronne 18 pour que le patin de frein 52 puisse agir sur la couronne 18 lors de l'immobilisation du véhicule 2.

Le corps 50 comporte un évidement 56 et un logement 58 ménagé perpendiculairement à ce dernier. L'évidement 56 est borgne à l'une de ses extrémités et ouvert à l'autre. Le logement 58 est destiné à recevoir une partie des éléments des moyens 54 de déplacement.

Le patin de frein 52 est monté axialement coulissant dans l'évidement 56. Le patin de frein 52 est destiné à se déplacer entre une position active dans laquelle il exerce une force de friction sur la couronne 18 de manière à freiner celle-ci et une position escamotée dans laquelle il n'exerce aucune action sur la couronne 18.

Le patin de frein 52 comporte une face avant 60 et une face arrière 62.

La face avant 60 est adaptée pour exercer une force de friction sur la couronne 18 lorsque le patin de frein est en position active. Par exemple, cette face avant est lisse et légèrement incurvée de manière à venir en appui sur l'extrémité d'au moins deux dents de la couronne 18.

Les moyens 54 de déplacement sont destinés à déplacer le patin de frein 52 entre sa position active et sa position escamotée sous le contrôle des moyens de commande 6.

Ces moyens 54 de déplacement comportent, par exemple, un système à bielles et à tige d'actionnement actionné par un actionneur électromagnétique 66 et des moyens élastiques 68 tels qu'un ressort hélicoïdal.

Le système à bielles et à tige d'actionnement est destiné à transmettre les forces exercées par l'actionneur électromagnétique 66 et/ou par les moyens élastiques 68, au patin de frein 52 pour que ce dernier se déplace entre sa position active et sa position escamotée.

Le système à bielles et à tige d'actionnement comporte, par exemple, une première et une seconde bielles 70, 72 associées à l'extrémité d'une tige d'actionnement 74 par l'intermédiaire d'une première liaison pivotante 76.

Une extrémité de la première bielle 70 est reliée à la face arrière 62 du patin de frein 52 par l'intermédiaire de deuxième liaison pivotante 80. L'autre extrémité de la première bielle 70 est reliée à la tige d'actionnement 74 par l'intermédiaire de la première liaison pivotante 76.

L'extrémité de la seconde bielle 72 est reliée au corps 50 par l'intermédiaire d'une troisième liaison pivotante 82. Cette troisième liaison pivotante 82 est montée dans une lumière 83 de manière à permettre également un déplacement en translation de cette extrémité de la seconde bielle 72. Pour cela l'axe de translation de la lumière 83 est par exemple disposé sensiblement parallèle à l'axe de déplacement du patin de frein 52. L'autre extrémité de la seconde bielle 72 est reliée à la tige d'actionnement 74 par l'intermédiaire de la liaison pivotante 76.

Les liaisons pivotantes 76, 80 et 82 sont par exemple réalisées à l'aide de pivots.

La tige d'actionnement 74 est destinée à déplacer la liaison pivotante 76 entre une position active dans laquelle le pivot correspondant est en butée sur une butée 84 de sécurité, et une position escamotée dans laquelle la liaison pivotante 76 s'engage légèrement dans l'ouverture du logement 58.

Pour cela, l'une des extrémités de la tige d'actionnement 74 est solidaire de la liaison pivotante 76 tandis que la partie centrale de cette même tige est associée à des moyens d'actionnement formés par le ressort hélicoïdal 68 et l'actionneur électromagnétique 66.

La partie centrale de la tige d'actionnement 74 traverse le fond du logement 58 et une paroi du corps 50 perpendiculairement à la direction de déplacement du patin de frein 52.

Le ressort hélicoïdal 68 est destiné à déplacer la tige d'actionnement 74 vers sa position active. Pour cela, le ressort hélicoïdal 68 est disposé en appui d'une part sur le fond du logement 58 et d'autre part sur une butée 86 solidaire de la tige d'actionnement 74. La butée 86 est adaptée pour coulisser à l'intérieur du logement 58 en même temps que la tige.

L'actionneur électromagnétique 66 est monté à l'extérieur du corps 50 et est solidaire de celui-ci. Cet actionneur électromagnétique est destiné à exercer une force dans la direction, notée F1, opposée à la force de rappel du ressort hélicoïdal 68. L'actionneur électromagnétique est apte à exercer une force dans la direction F1 supérieure à la force de rappel du ressort hélicoïdal 68.

L'extrémité opposée à la liaison pivotante 76 de la tige d'actionnement 74 comporte un rebord 88 destiné à servir de prise lors d'un actionnement manuel de la tige d'actionnement 74.

La figure 3 représente une variante du système à bielles et à tige d'actionnement décrit précédemment.

Les éléments communs avec la figure 2 portent les mêmes références et ne seront pas décrits.

Dans cette variante le système à bielles et à tige d'actionnement comporte une première et une seconde bielles 90 et 92 reliées à l'extrémité l'une de l'autre par une liaison pivotante 94, cette liaison pivotante 94 étant en appui sur une butée 96 disposée à l'extrémité d'une tige d'actionnement 98.

La première et la seconde bielles 90, 92 sont destinées à transformer les déplacement de la tige d'actionnement 94 en déplacement du patin de frein 52 entre sa position active et sa position escamotée.

L'extrémité opposée à la liaison pivotante 94 de la première bielle 90 est reliée par la liaison pivotante 80 à la face arrière 62 du patin de frein 52.

L'extrémité opposée à liaison pivotante 94 de la seconde bielle 92 est reliée par une liaison pivotante 100 au corps 50.

Les liaisons pivotantes 94 et 100 sont, par exemple, formées par des pivots.

Chaque bielle 90, 92 comporte une attache respective 102, 104 pour fixer les extrémités de moyens élastiques 106.

Les moyens élastiques 106 sont aptes à solliciter le patin de frein 52 vers sa position escamotée par l'intermédiaire des bielles 90 et 92 et à maintenir la liaison pivotante 94 en appui sur la butée 96 de la tige d'actionnement 98.

La tige d'actionnement 98 est similaire à la de la tige d'actionnement 74 de la figure 2. Toutefois, contrairement à la de la tige d'actionnement 74 de la figure 2, la tige d'actionnement 98 n'est pas solidaire de la liaison pivotante entre la première et la seconde bielles mais comporte la butée 96 à son extrémité.

Cette butée 96 est destinée d'une part à venir en appui sur la liaison pivotante 94 et d'autre part à servir de surface d'appui au ressort hélicoïdal 68.

Le fonctionnement du dispositif d'immobilisation 8 va maintenant être décrit à l'aide des figures 1 et 2.

Le fonctionnement de la variante décrit en regard de la figure 3 découle du fonctionnement du dispositif d'immobilisation de la figure 2 et ne sera donc pas décrit ici.

Lors de la mise en route du véhicule, les moyens de commande 6 sont mis sous tension. A la mise sous tension des moyens de commande 6, ceux-ci activent l'actionneur électromagnétique 66. Lorsque l'actionneur électromagnétique est activé, il exerce une force dans la direction F1 supérieure à la force de rappel du ressort hélicoïdal 68. La tige d'actionnement 74 se déplace donc dans la direction F1 et entraîne dans cette direction la liaison pivotante 76.

Lors de ce déplacement, et puisque la liaison pivotante 82 de la seconde bielle 72 est solidaire du corps 50, l'extrémité comportant la liaison pivotante 80 de la première bielle 70 se déplace vers l'intérieur du manchon et entraîne donc le patin de frein 52 vers sa position escamotée. Après activation de l'actionneur électromagnétique 66, le dispositif 8 d'immobilisation n'exerce donc plus d'action sur la couronne 18.

Lors du stationnement du véhicule automobile 2, les moyens 6 de commande sont hors tension. La mise hors tension des moyens 6 de commande entraîne la mise hors tension de l'actionneur électromagnétique 66 qui n'exerce alors plus aucune force sur la de la tige d'actionnement 74.

La tige d'actionnement 74 n'est alors soumise qu'à la force de rappel du ressort hélicoïdal 68, et se déplace dans la direction opposée à la direction F1.

La liaison pivotante 76 se déplace alors elle aussi dans la direction opposée à la direction F1.

Puisque la liaison pivotante 82 est solidaire du corps 50, le déplacement de la liaison pivotante 76 vers la butée 84 entraîne par l'intermédiaire de la première bielle 70 le déplacement du patin de frein 52 jusqu'à sa position active.

En position active, la face avant 60 du patin de frein 52 est en appui sur au moins l'extrémité de deux dents de la couronne de démarreur 18. La force d'appui exercée par la face avant 60 du patin de frein 52 sur les extrémités des dents de la couronne 18 est suffisante pour bloquer celle-ci en rotation.

Ainsi, si le conducteur engage une vitesse de la boîte de vitesses 32, la couronne de démarreur 18 immobilisée par le dispositif 8 d'immobilisation est en prise avec les roues motrices du véhicule 2. On conçoit donc que dans ces conditions le véhicule 2 est difficile à déplacer, même en l'absence de frein à main, et que l'invention décrite ici constitue un système d'immobilisation d'un véhicule automobile en stationnement indépendant du système d'actionnement des soupapes du moteur à combustion utilisé. Lorsque le dispositif d'immobilisation 8 est en position active et qu'une vitesse a été engagée, si on exerce une force de poussée pour déplacer le véhicule en stationnement suffisante pour vaincre la force de friction, appelée F0, exercée par le patin de frein 52 sur la couronne de démarreur 18, le véhicule 2 est alors déplaçable.

On obtient ainsi un déblocage en rotation de la couronne 18 si la force de poussée du véhicule est supérieure à F0. On évite donc que des pièces du véhicule soient soumises à des contraintes mécaniques trop fortes et donc toute détérioration de celles-ci.

On remarquera également que puisque la surface avant 60 du patin de frein 52 est lisse et agit uniquement par friction sur l'extrémité des dents de la couronne 18, la rotation de la couronne de démarreur 18 alors que le dispositif d'immobilisation 8 est activé, ne provoque pas de bruit susceptible d'éveiller l'attention du conducteur.

En variante, un dispositif d'immobilisation tel que le dispositif d'immobilisation 8 est adapté pour qu'un patin de frein tel que le patin de frein 52 soit en appui sur une face latérale de la couronne de démarreur 18 lorsque le dispositif 8 est activé.

Il va de soi que d'autres modes de réalisation particuliers de la couronne peuvent être envisagés et que la périphérie de celle-ci peut comprendre des parties en saillie et en creux successives de formes différentes à celles décrites.

## Revendications

1. Système d'immobilisation d'un véhicule automobile (2) en stationnement comportant :
- une couronne (18) destinée à être en prise avec des roues motrices du véhicule,
- un dispositif (8) d'immobilisation en rotation de ladite couronne (18) pour immobiliser le véhicule (2) en stationnement lorsque la couronne (18) est en prise avec les roues motrices, sous le contrôle de moyens de commande (6),
**caractérisé en ce que** le dispositif (8) d'immobilisation comporte un patin de frein (58) déplaçable entre une position escamotée de déblocage de ladite couronne (18), et une position active dans laquelle il est en appui sur ladite couronne (18) pour la bloquer en rotation par friction.

2. Système selon la revendication 1, dans lequel la couronne (18) présente à sa périphérie, des parties en saillie et en creux successives, **caractérisé en ce que** le patin de frein (52) comporte une surface lisse (60) adaptée pour être en appui sur les extrémités d'au moins deux parties en saillie successives de la couronne (18).

3. Système selon l'une quelconque des revendications précédentes, **caractérisé en ce que** la couronne (18) est formée par une couronne de démarreur du véhicule.

4. Système selon l'une quelconque des revendications précédentes, **caractérisé en ce que** le dispositif (8) d'immobilisation comporte des moyens (54) de déplacement dudit patin de frein (52), ces moyens (54) de déplacement étant équipés de moyens élastiques (68) exerçant sur le patin de frein (52) une force de rappel pour solliciter celui-ci en position active, et de moyens électromagnétiques (66) pour déplacer ce patin de frein jusqu'à sa position escamotée.

5. Système selon l'une quelconque des revendications précédentes, **caractérisé en ce que** le dispositif (8) d'immobilisation est intégré dans un démarreur (20) du véhicule (2).

6. Système selon l'une quelconque des revendications précédentes, **caractérisé en ce que** le dispositif (8) d'immobilisation est intégré dans une boîte de vitesses (32) associée aux roues motrices du véhicule.

7. Système selon l'une quelconque des revendications précédentes, **caractérisé en ce que** le véhicule (2) comporte un moteur thermique équipé de soupapes à commande électromagnétique, apte à actionner lesdites roues motrices du véhicule.

8. Moyens de commande (6) **caractérisés en ce qu'**ils sont adaptés pour contrôler le dispositif (8) d'immobilisation de l'une quelconque des revendications précédentes.
